## Europäisches Patentamt
## European Patent Office
## Office européen des brevets

(19)

(11) Veröffentlichungsnummer: **0 120 114**
**A1**

(12) **EUROPÄISCHE PATENTANMELDUNG**

(21) Anmeldenummer: 83107049.5

(22) Anmeldetag: 19.07.83

(51) Int. Cl.³: **B 22 D 11/126**
**B 23 K 7/02**

(30) Priorität: 29.03.83 DE 8309304 U

(43) Veröffentlichungstag der Anmeldung:
03.10.84 Patentblatt 84/40

(84) Benannte Vertragsstaaten:
AT BE CH DE FR GB IT LI LU NL

(71) Anmelder: AUTE Gesellschaft für autogene Technik mbH
Zollikerstrasse 228
CH-8029 Zürich(CH)

(72) Erfinder: Lotz, Horst K.
Kiefernweg 13
D-6200 Wiesbaden-Delkenheim(DE)

(74) Vertreter: Blumbach Weser Bergen Kramer Zwirner Hoffmann Patentanwälte
Radeckestrasse 43
D-8000 München 60(DE)

(54) Strangbrennschneidmaschine für Stranggiessanlagen mit unter brochener Schneidsauerstoffzuführung.

(57) Bei einer Strangbrennschneidmaschine für Stranggeißanlagen zum Durchtrennen des Gießstranges, mit dem die Brennschneidmaschine für die Dauer der Durchtrennung über eine Brennschneidstrecke in Richtung des Strangvorschubes mitläuft, wobei die Schneidsauerstoffzuführung und eventuell die Heizflammen-Versorgung vorübergehend unterbrochen sind, wenn sich die Brennschneidmaschine im Bereich einer Unterstützungsrolle (2) des Rollganges befindet, ist in der Schneidsauerstoffzuführleitung (10) unmittelbar vor deren Einmündung in den Brenner (7) ein Absperrventil (16) und gegebenenfalls zwischen Absperrventil (16) und Düsenaustritt (8) ein Schnellentlüftungsventil (28) vorgesehen, um ein Nachlauf von Schneidsauerstoff durch die Düse (8) und damit eine Veränderung der Schneidfuge auf ein Minimum zu reduzieren.

Fig. 1

EP 0 120 114 A1

**Strangbrennschneidmaschine für Stranggießanlagen
mit unterbrochener Schneidsauerstoffzuführung**

Die Erfindung betrifft eine Strangbrennschneidmaschine
für Stranggießanlagen zum Durchtrennen des Gießstranges,
mit dem die Brennschneidmaschine für die Dauer der
Durchtrennung über eine Brennschneidstrecke in Richtung des Strangvorschubes mitläuft, wobei die Schneidsauerstoffzuführung und eventuell die Heizflammen-Versorgung vorübergehend unterbrochen sind, wenn sich die
Brennschneidmaschine im Bereich einer Unterstützungsrolle des Rollganges befindet.

Beim Schneiden eines Stranges durch eine Brennschneidmaschine besteht allgemein das Problem, daß durch den
Schneidvorgang die Stützrollen beschädigt werden, auf
denen sich der Strang bewegt. Es ist beispielsweise bekannt, die Stützrollen vorübergehend abzusenken, wenn
sich der Schneidbrenner dem Bereich der betreffenden
Stützrolle nähert. Eine solche Maßnahme ist relativ
aufwendig durch die Einrichtungen, die das Absenken
der Stützrolle hervorrufen. Außerdem ist - wenn auch nur
vorübergehend - dieser Bereich des Stranges nicht abgestützt, wodurch es wiederum erforderlich ist, den Stützabstand zweier aufeinanderfolgender Stützrollen nicht zu
groß zu machen.

Desweiteren ist es bekannt geworden, anstelle von Stützrollen, die über die gesamte Breite des Strangs diesen
abstützen, auf einer Welle Rollenabschnitte vorzusehen,
deren Abstützbreite nur einen Bruchteil der Strangbreite ausmacht, so daß es möglich ist, einen entsprechenden Schneidbrennerweg vorzusehen, der durch die Zwischenräume zwischen den abstützenden Rollenabschnitten
hindurchführt. Diese Maßnahmen erfordern aufwendige Steuereinrichtungen und führen zur Beschädigung der Rollen, wenn aus irgendwelchen unvorhergesehenen Gründen von dem vorgesehenen Schneidweg abgewichen wird.

Es ist auch sicher in der Praxis wirtschaftlich, im Bereich einer Unterstützungsrolle des Rollganges die Schneidsauerstoffzuführung und eventuell die Heizflammenversorgung vorübergehend zu unterbrechen. In diesem Fall ist es möglich, mit einem normalen Rollgang mit die Bramme unterstützenden Stützrollen zu arbeiten, ohne daß beim Schneidvorgang die Gefahr einer Beschädigung der Stützrollen besteht. Es ist dabei jedoch von Nachteil, daß die Schneidfugen sich verändern und insbesondere verbreitern.

Der Erfindung liegt daher die Aufgabe zugrunde, eine Strangbrennschneidmaschine der eingangs genannten Art verfügbar zu machen, bei der trotz vorübergehender Unterbrechung der Schneidsauerstoffzuführung und eventuell der Heizflammenversorgung eine Veränderung und insbesondere Verbreiterung der Schneidfuge vermieden ist.

Die Erfindung besteht darin, daß nach dem Zeitpunkt der Abschaltung ein sonst vorhandener Schneidsauerstoffnachlauf mit einer entsprechenden Reaktion vermieden bzw. auf ein Minimum reduziert ist.

Das wird in zweckmäßiger Weise dadurch erreicht, daß in der Schneidsauerstoffzuführleitung ein Absperrventil, in Richtung der Sauerstoffströmung gesehen, nach der Schalttafel, und zwar möglichst unmittelbar vor der Einmündung der Schneidsauerstoffzuleitung, in den Brenner, angeordnet ist.

Dabei ist das vor dem Brenner in der Schneidsauerstoffzuführleitung sitzende Absperrventil mit Vorteil durch elektromagnetische Fernsteuerung betätigbar.

Um den Nachlauf von Schneidsauerstoff weiter herabzusetzen, ist in einer Weiterbildung der Erfindung vorgesehen, daß in der Schneidsauerstoffleitung zwischen Absperrventil und Düsenaustritt ein Schnellentlüftungsventil vorgesehen ist, das öffnet, wenn der Druck aufgrund der Schneidsauerstoffabschaltung abfällt.

Dieses Schnellentlüftungsventil kann im Brenner vor der Düse angeordnet sein oder auch in der Brennschneiddüse selbst sitzen.

In vorteilhafter Weise führt die Schneidsauerstoffzuführleitung in eine Kurzdüse, die einen im Vergleich zu anderen Düsen schmalen Schneidstrahl aussendet und eine kleine Schneidfuge im Gießstrang hervorruft.

Eine zweckmäßige Ausbildung der Erfindung besteht darin, daß die Heizsauerstoff- und Heizgaszuführleitungen je eine Bypassleitung mit einem Absperrventil und einem Einstell- oder Steuerventil bzw. Druckminderer aufweisen, die das Haupteinstellventil oder den Hauptdruckminderer für den Normalbetrieb und ein zugeordnetes Absperrventil umgehen, und daß bei der Unterbrechung der Schneidsauerstoffzuführleitung die Heizstoff- und Heizgaszuführleitungen unterbrochen und die Bypassleitungen für eine verringerte Zufuhr geöffnet sind.

Eine Weiterbildung der Erfindung besteht darin, daß der Brenner eine Bewegung ausführt, die den nachlaufenden Schneidsauerstoff von der bisherigen Schnittstelle trennt. Dabei kann der Brenner eine in einer jeden gewünschten Richtung über der Schneidgeschwindigkeit liegende Bewegung ausführen, so daß der Brennstrahl abreißt. Es ist mit Vorteil auch möglich, daß der Brenner bei gleichzeitigem Ausschalten der Schneidsauerstoffzuführung eine ansatzlose Rücklaufbewegung durchführt. Zweckmäßig kann der Brenner auch seitlich verschwenken oder eine Bewegung ausführen, die den nachlaufenden Schneidsauerstoff in der Schnittstelle schwächt und wirkungslos macht, beispielsweise dadurch, daß der Brenner angehoben wird.

In ihrer weiteren Ausbildung sieht die Erfindung vor, daß eine mechanische Schneidsauerstoffablenkung in den Sauerstoffstrahl hineinbewegbar ist, beispielsweise ein einschiebbares oder einschwenkbares Abweisblech.

Eine weitere Ausführungsform der Erfindung besteht darin, daß im Bereich der Unterstützungsrolle des Rollgangs Taster vorgesehen sind, die automatisch die Schneidsauerstoffabschaltung bzw. Wiederzuschaltung und/oder die Bewegungen des Brenners bzw. der Einrichtungen zur Schneidsauerstoffstrahlablenkung bzw. die Rücknahme oder Rückstellung auslösen.

Die Erfindung soll nachstehend beispielhaft anhand der beigefügten Zeichnungen erläutert werden. In den Zeichnungen zeigen:

Fig. 1 eine Brennschneidmaschine mit den zugeordneten Gaszuführleitungen in schematischer Darstellung; und

Fig. 2 eine Düse in vergrößertem Maßstab mit einem Schnellentlüftungsventil für den Schneidsauerstoff.

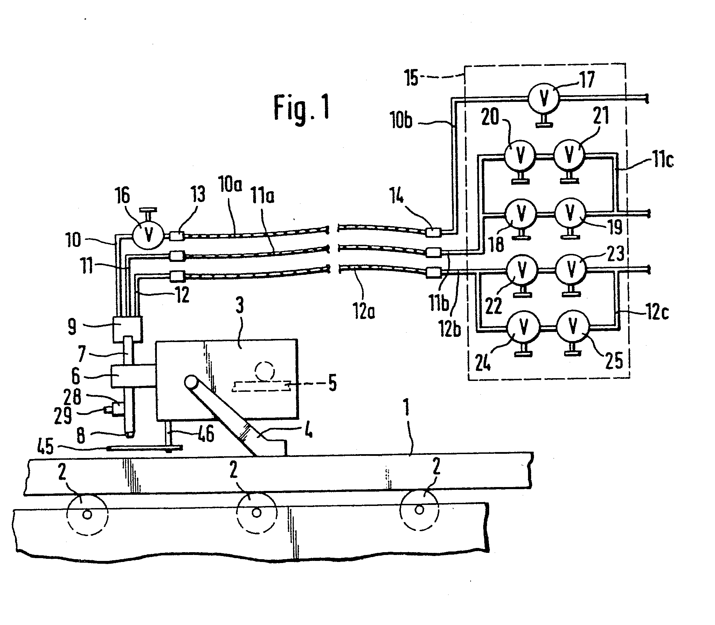

In der beigefügten Figur 1 ist ein Gießstrang 1 dargestellt, der sich in der Zeichnung von links nach rechts auf Stützrollen 2 eines nicht näher dargestellten Rollgangs bewegt. Während dieser Bewegung wird von einer Brennschneidmaschine 3 ein Schneidvorgang durchgeführt. Zu diesem Zweck wird die Brennschneidmaschine 3 synchron mit dem Strang 1 bewegt. In der beigefügten Zeichnung ist ein Aufklemmhebel 4 dargestellt, der in einer Reibungsauflage zum Strang 1 gebracht wird, wobei die Auflagekraft einstellbar sein kann. Auf diese Weise wird vom Strang 1 die Brennschneidmaschine 3 mitgeführt und bewegt sich z.B. auf einer Schiene 5, die gestrichelt dargestellt ist. Die Brennschneidmaschine 3 kann aber auch direkt auf dem Strang 1 aufgesetzt werden. Zur Herstellung der Synchronbewegung zwischen Brennschneidmaschine 3 und Strang 1 sind die verschiedensten Maßnahmen bekannt. An der Brennschneidmaschine 3 ist mittels eines Brennerhalters 6 ein Brenner 7 angebracht, der an seinem unteren Ende eine Düse 8 trägt, durch die der Schneidstrahl austritt und den Schnitt in der Bramme 1 erzeugt.

An dem der Düse 8 gegenüberliegenden, oberen Ende des Brenners 7 befindet sich ein Brennerkopf 9. In den Brennerkopf 9 münden eine Schneidsauerstoffleitung 10, eine Heizsauerstoffleitung 11 und eine Heizgasleitung 12. Diese starren Gasleitungen 10, 11 und 12, die vom Brennerkopf 9 abgehen, werden über Muffen 13 durch Gasschläuche 10a, 11a und 12a fortgeführt. Die Gasschläuche 10a, 11a und 12a werden über Schleppketten geführt, was im einzelnen nicht dargestellt ist, und ermöglichen die Bewegung des Brenners 3 zusammen mit dem Gießstrang 1 während des Schneidvorgangs. Am Ende der Gasschläuche 10a, 11a und 12a sind Muffen 14 angebracht, die eine Verbindung der Gasschläuche mit entsprechenden starren Leitungen 10b, 11b und 12b herstellen. Diese starren Leitungen werden zu einem gestrichelt angedeuteten Gassteuertafelstand 15 geführt, wo die Einstell- und Absperrventile zusammengefaßt sind.

Eine Ausnahme bildet ein Absperrventil 16, das unmittelbar hinter dem Brennerkopf 9 im starren Teil der Schneidsauerstoffzuführleitung 10 angeordnet ist. Ein Einstell- oder Regelventil 17 befindet sich in der Schneidsauerstoffzuführleitung 10, 10b in der Steuertafel 15. Die Heizsauerstoffzuführleitung 11b im Bereich der Steuertafel 15 weist eine Bypassleitung 11c auf und in entsprechender Weise ist die Brenngaszuführleitung 12b im Bereich der Gassteuertafel 15 mit einer Bypassleitung 12c versehen.

Die Bypassleitung 11c der Heizsauerstoffleitung 11b umgeht ein an dieser angebrachtes Absperrventil 18 sowie ein Regel- oder Steuerventil 19. Die Bypassleitung 11c der Heizsauerstoffleitung 11b ist selbst mit einem Absperrventil 20 und einem Steuer- oder Regelventil 21 versehen.

In entsprechender Weise umgeht die Bypassleitung 12c der Heizgasleitung 12b ein in dieser angeordnetes Absperrventil 22 und Steuer- oder Regelventil 23. Die Bypassleitung 12c der Heizgasleitung 12b ist selbst mit einem Absperrventil 24 und einem Steuer- oder Regelventil 25 ausgestattet.

Während des Schneidvorgangs ist das Absperrventil 16 in der Schneidsauerstoffleitung 10 geöffnet und führt dem Brenner 7 Schneidsauerstoff in einer Menge zu, wie es mit dem Ventil 17 in der Gassteuertafel 15 eingestellt ist. In der Heizsauerstoffleitung 11b ist das Absperrventil 18 ebenfalls geöffnet und führt dem Brennerkopf 9 über die Heizsauerstoffleitung 11 Heizsauerstoff in einer Menge zu, wie es mit Hilfe des Ventils 19 in der Gassteuertafel 15 eingestellt ist. In entsprechender Weise wird Heizgas durch die Heizgaszuführleitung 12 dem Brennerkopf 9 zugeführt, indem das Absperrventil 22 geöffnet ist und die entsprechende Menge durch das Ventil 23 in der Heizgasleitung 11b der Steuertafel 15 eingestellt ist.

Wenn sich der Brenner 7 mit seiner Düse 8 einem Bereich der Stützrolle 2 nähert, wird das elektromagnetisch ferngesteuerte Absperrventil 16 in der Schneidsauerstoffzuführleitung 10 geschlossen und damit der Schneidvorgang unterbrochen. Gleichzeitig schließt in der Steuertafel 15 in der Heizsauerstoffzuführleitung 11b das Absperrventil 18, und das Absperrventil 20 in der Bypassleitung 11c, das bisher geschlossen war, öffnet sich. Dadurch gelangt nur ein reduzierter Heizsauerstoffstrom durch die Heizsauerstoffzuführleitung in den Brennerkopf 9, wie es von dem Steuer- oder Regelventil 21 in der geöffneten Bypassleitung 11 zugelassen wird. Entsprechend schließt bei der Unterbrechung des Schneidvorgangs auch das Absperrventil 22 in der Heizgaszuführleitung 12b in der Steuertafel 15, und das Absperrventil 24 in der Bypassleitung 12c öffnet sich, so daß ein Heizgasstrom gemäß der Einstellung des Steuer- oder Regelventils 25 in der Bypassleitung 12 durch die Heizgaszuführleitung 12 in den Brennerkopf gelangen kann. Auf diese Weise wird es ermöglicht, daß zwar der Brenner eine Gasversorgung für eine reduzierte Flamme mit der Funktion einer Zündflamme erhält, aber im übrigen der Brenner praktisch außer Betrieb ist, bis die Düse 18 den Bereich der Stützrolle 2 verläßt. Ist dies der Fall, so wird das Absperrventil 16 in der Schneidsauerstoffzuführleitung 12 geöffnet, und gleichzeitig schließen das Absperrventil 20 in der Bypassleitung 11c der Heizsauerstoffzuführleitung 11 und das Absperrventil 24 in der Bypassleitung 12c der Heizgasleitung 12b, während das Absperrventil 18 in der Heizsauerstoffzuführleitung 11b und das Absperrventil 22 in der Heizgaszuführleitung 12b öffnen. Durch die während des Pausierens des Schneidvorgangs reduzierte Flamme kann der Schneidvorgang nunmehr bei voller Gaszuführung wieder fortgesetzt werden.

Um das Ausströmen eines restlichen Schneidsauerstoffs, der sich zwischen dem Absperrventil 16 unmittelbar hinter dem Brennerkopf 9 und dem Austritt der Düse 8 befindet, ist in dem Brenner 7 ein Schnellentlüftungsventil 28 vorgesehen, das öffnet, wenn der Druck aufgrund der Abschaltung des Schneidsauerstoffs durch das Absperrventil 16 abfällt. Dadurch wird ein Nachlauf von Schneidsauerstoff in der Düse 8 stark verringert, indem der Schneidsauerstoff durch die Entlüftungsröhre 29 am Schnellentlüftungsventil 28 ausströmt.

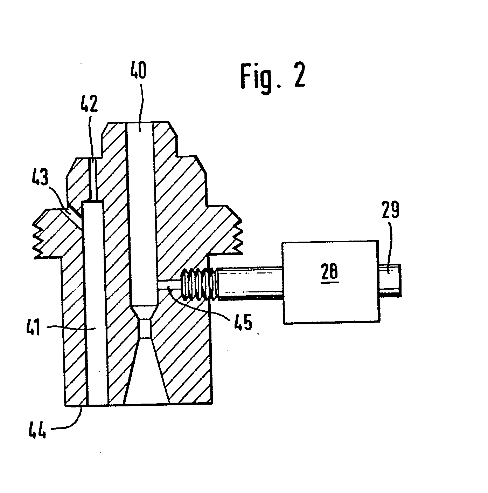

Wie Fig. 2 zeigt, kann das Schnellentlüftungsventil 28 auch direkt in der Brennschneiddüse sitzen. Die Fig. 2 zeigt eine Kurzdüse im Schnitt mit einem mittigen Schneidsauerstoffkanal 40 und einer Brenngasmischbohrung 41, die eine Brenngaszuführung 42 und eine Brenngaszuführung 43 aufweist. Die Düse kann auch getrennt mit einer zum Düsenausgang 44 geführten Heizsauerstoffbohrung versehen sein, die in Fig. 2 nicht dargestellt ist, wie überhaupt die unterschiedlichsten Düsenarten mit verschiedenen Heizgas- und Heizsauerstoffführungen denkbar sind. Vom Heizsauerstoffkanal 40 zweigt eine Querbohrung 45 ab, die zu einem an der Düse sitzenden Schnellentlüftungsventil 28 führt, so daß, wie beschrieben, der Schneidsauerstoff über die Entlüftungsröhre 29 entweicht, wenn das Schnellentlüftungsventil 28 bei einem entsprechenden Druckabfall öffnet, der durch das Absperrventil 16 (Fig. 1) hervorgerufen wird.

Ein solches Schnellentlüftungsventil kann grundsätzlich in allen Düsen angeordnet werden, so insbesondere auch

0120114

an einer Kurzdüse, die einen im Vergleich zu anderen Düsen schmalen Schneidstrahl aussendet und eine kleine Schneidfuge im Gießstrang hervorruft.

Um zu verhindern, daß ein ausfließender Restschneidsauerstoff die Schneidfuge verändert und insbesondere verbreitert, kann auch der Brenner so bewegt werden, daß der nachlaufende Schneidsauerstoff von der bisherigen Schnittstelle getrennt wird. Grundsätzlich kann dabei der Brenner 7 eine Bewegung in einer jeden gewünschten Richtung ausführen, die über der Schneidgeschwindigkeit liegt, so daß der Brennstrahl abreißt. So kann der Brenner 7 bei gleichzeitigem Ausschalten der Schneidsauerstoffzuführung durch das Absperrventil 16 eine Ansatzlose Rücklaufbewegung durchführen oder der Brenner 7 verschwenkt seitlich oder wird in bekannter Weise angehoben, so daß der nachlaufende Schneidsauerstoff in der Schnittstelle geschwächt und wirkungslos gemacht wird.

Eine weitere Ausbildung der Brennschneidmaschine besteht darin, daß eine mechanische Schneidsauerstoffablenkung des Sauerstoffstrahls erfolgt. Zu diesem Zweck ist ein Abweisblech 45 vorgesehen, das über eine Welle 46 mit der Brennschneidmaschine 3 verbunden ist. Wird durch das Absperrventil 16 der Schneidsauerstoff abgeschaltet, so schwenkt über die Welle 46 das Abweisblech 45 ein und restlicher aus der Düse 8 ausfließender Sauerstoff kann die Schneidfuge in dem Gießstrang 1 nicht mehr beeinträchtigen.

Zweckmäßig sind im Bereich der Unterstützungsrolle 2 des Rollganges nicht dargestellte Taster vorgesehen, die automatisch die Abschaltung des Schneidsauerstoffs bzw. die Wiederzuschaltung durch das Absperrventil 16 und/oder die Bewegungen des Brenners 7 bzw. des Abweisbleches 45 sowie die Rückbewegungen auslösen.

Diese Maßnahme ermöglichen eine optimale Schnittqualität. Indem das Absperrventil 16 in der Schneidsauerstoffzuführleitung 10 unmittelbar hinter dem Düsenkopf
9 angeordnet ist, gibt es zunächst kein Nachfließen des
Schneidsauerstoffs aus der verhältnismäßig langen Leitung von der Steuertafel 15 zum Düsenkopf 9. Außerdem
wird der Brenner durch die Versorgung von Heizsauerstoff
und Brenngas über die Bypassleitungen 11c bzw. 12c während
des Pausierens nur mit einer minimalen Gasmenge versorgt,
die nur eine reduzierte Flamme zum Zünden aufrechterhält
und Restsauerstoff aus dem Bereich zwischen Absperrventil 16 und Düse 8 kann über ein Schnellentlüftungsventil 28 entweichen, wobei ein Abweisblech 45 eine Beeinträchtigung der Schneidfuge im Gießstrang 1 restlos verhindert.

Durch die erfindungsgemäße Brennschneidmaschine wird
somit ein Beschädigen der Stützrolle 2 des Rollganges
1 vermieden, ohne daß die Schneidfuge im Werkstück 1
verändert oder gar verbreitert wird.

Patentansprüche :

1.  Strangbrennschneidmaschine für Stranggießanlagen zum Durchtrennen des Gießstranges, mit dem die Brennschneidmaschine für die Dauer der Durchtrennung über eine Brennschneidstrecke in Richtung des Strangvorschubes mitläuft,
dadurch gekennzeichnet, daß eine Unterbrechung bzw. Ablenkung des Schneidsauerstoffstrahles während des Überlaufens einer Strangstützrolle (2) mit geringstem Sauerstoffaustritt nach dem Abschalten zur Vermeidung einer Stützrollenbeschädigung und Verbreiterung der Schneidfuge erfolgt.

2.  Brennschneidmaschine nach Anspruch 1, dadurch gekennzeichnet, daß in der Schneidsauerstoffzuführleitung (10) ein Absperrventil (16),in Richtung der Sauerstoffströmung gesehen, nach der Schalttafel (15) angeordnet ist.

3.  Brennschneidmaschine nach Anspruch 2, dadurch gekennzeichnet, daß das Absperrventil (16) unmittelbar vor der Einmündung der Schneidsauerstoffzuführleitung (10) in den Brenner (7) angeordnet ist.

4.  Brennschneidmaschine nach Anspruch 3, dadurch gekennzeichnet, daß das vor dem Brenner (7) in der Schneidsauerstoffzuführleitung (10) sitzende Absperrventil (16) durch elektromagnetische Fernsteuerung betätigbar ist.

5.  Brennschneidmaschine nach einem der Ansprüche 1 bis 4, dadurch gekennzeichnet, daß in der Schneidsauerstoff-

0120114

leitung (10) zwischen Absperrventil (18) und Düsenaustritt (8) ein Schnellentlüftungsventil (28) vorgesehen ist, das öffnet, wenn der Druck aufgrund der Schneidsauerstoffabschaltung abfällt, so daß ein Nachlauf von Schneidsauerstoff durch die Düse (8) stark verringert wird.

6. Brennschneidmaschine nach Anspruch 5, dadurch gekennzeichnet, daß das Schnellentlüftungsventil (10) im Brenner (7) vor der Düse (8) angeordnet ist.

7. Brennschneidmaschine nach Anspruch 6, dadurch gekennzeichnet, daß das Schnellentlüftungsventil (10) in der Brennschneiddüse (8) sitzt.

8. Brennschneidmaschine nach einem der Ansprüche 1 bis 7, dadurch gekennzeichnet, daß die Schneidsauerstoffzuführleitung (10) in eine Kurzdüse (8) führt, die einen im Vergleich zu anderen Düsen schmalen Schneidstrahl aussendet und eine kleine Schneidfuge im Gießstrang (1) hervorruft.

9. Brennschneidmaschine nach einem der Ansprüche 1 bis 8, dadurch gekennzeichnet, daß die Heizsauerstoff- (11) und Heizgaszuführleitungen (12) je eine Bypassleitung (11b bzw. 12b) mit einem Absperrventil (20 bzw. 24) und einem Einstell- oder Steuerventil (21 bzw. 25) bzw. Druckminderer aufweisen, die das Haupteinstellventil (19 bzw. 23) oder den Hauptdruckminderer für den Normalbetrieb und ein zugeordnetes Absperrventil (18 bzw. 22) umgehen, und daß bei der Unterbrechung der Schneidsauerstoffzuführleitung (10) die Heizsauerstoff- (11b) und Heizgaszuführleitungen (12b) unterbrochen und die Bypassleitungen (11c, 12c) für eine verringerte Zufuhr geöffnet sind.

10. Brennschneidmaschine nach einem der Ansprüche 1 bis 9,

dadurch gekennzeichnet, daß der Brenner (7) eine Bewegung ausführt, die den nachlaufenden Schneidsauerstoff von der bisherigen Schnittstelle trennt.

11. Brennschneidmaschine nach einem der Ansprüche 1 bis 10,

dadurch gekennzeichnet, daß der Brenner (7) eine in einer jeden gewünschten Richtung, über der Schneidgeschwindigkeit liegende Bewegung ausführt, so daß der Brennstrahl abreißt.

12. Brennschneidmaschine nach einem der Ansprüche 1 bis 10,

dadurch gekennzeichnet, daß der Brenner (7) bei gleichzeitigem Ausschalten der Schneidsauerstoffzuführung eine ansatzlose Rücklaufbewegung durchführt.

13. Brennschneidmaschine nach einem der Ansprüche 1 bis 10,

dadurch gekennzeichnet, daß der Brenner (7) seitlich verschwenkbar ist.

14. Brennschneidmaschine nach einem der Ansprüche 1 bis 9,

dadurch gekennzeichnet, daß der Brenner (7) eine Bewegung ausführt, die den nachlaufenden Schneidsauerstoff in der Schnittstelle schwächt und wirkungslos macht.

15. Brennschneidmaschine nach Anspruch 14, dadurch gekennzeichnet, daß der Brenner (7) angehoben wird.

16. Brennschneidmaschine nach einem der Ansprüche 1 bis 9,

dadurch gekennzeichnet, daß eine mechanische Schneidsauerstoffablenkung (45, 46) in den Sauerstoffstrahl
hineinbewegbar ist.

17. Brennschneidmaschine nach Anspruch 16,
dadurch gekennzeichnet, daß die Schneidsauerstoffablenkung aus einem einschiebbaren oder einschwenkbaren
Abweisblech (45) besteht.

18. Brennschneidmaschine nach einem der Ansprüche
1 bis 17,
dadurch gekennzeichnet, daß im Bereich der Unterstützungsrolle (2) des Rollganges Taster vorgesehen
sind, die automatisch die Schneidsauerstoffabschaltung
bzw. Wiederzuschaltung und/oder die Bewegungen des
Brenners (7) bzw. der Einrichtungen zur Schneidsauerstoffstrahlablenkung (45) bzw. die Rücknahme oder Rückstellung auslösen.

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-2 926 509  (I.P.U. LTD.) * Seite 11, Zeilen 5-9; Seite 16, Zeilen 22-25 * | 1 | B 22 D   11/126 B 23 K    7/02 |
| Y | DE-A-1 951 839  (GEGA GESELLSCHAFT FÜR GASETECHNIK LOTZ KG) * Anspruch 3 * | 4,18 | |
| Y | US-A-2 259 955  (H.W. JONES) * Figur 1; Seite 2, linke Spalte, Zeilen 74-75 * | 2,3,13 | |
| Y | DE-B-1 182 027  (A. MESSER GmbH) * Spalte 2, Zeile 37 - Spalte 3, Zeile 26 * | 15,18 | |
| Y | US-A-2 511 591  (A.M. KELLER) * Figuren 3,4; Ref.Nr. 92-94,O; Spalte 8, Zeilen 22-47 * | 2,13, 15 | RECHERCHIERTE SACHGEBIETE (Int. Cl. 3) B 22 D B 23 K |

Der vorliegende Recherchenbericht wurde für alle Patentansprüche erstellt.

| Recherchenort | Abschlußdatum der Recherche | Prüfer |
|---|---|---|
| DEN HAAG | 10-11-1983 | STEIN K.K. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82